# EUROPEAN PATENT APPLICATION

(11) **EP 4 349 536 A1**
(43) Date of publication of application: **10.04.2024**
(21) Application number: 22811614.1
(22) Date of filing: 24.05.2022
(51) Int. Cl.: B25J 9/00, B25J 5/00, B25J 11/00, B25J 9/16

(54) **MOVABLE BASE FOR COLLABORATIVE ROBOT FOR COOKING**

(30) Priority: 26.05.2021 KR 20210067777
(71) Applicant: Neuromeka Co., Ltd., Seongdong-gu, Seoul 04782 (KR)
(72) Inventor: PARK, Jong Hoon, Seoul 05080 (KR); HEO, Young Jin, Seoul 04792 (KR); KIM, Tae Jung, Seoul 02587 (KR); PARK, Hyun Ah, Gwacheon-si, Gyeonggi-do 13827 (KR)
(74) Representative: Michalski Hüttermann & Partner Patentanwälte mbB
(86) International application number: PCT/KR2022/007361
(87) International publication number: WO 2022/250421

(57) **Abstract**

The present invention provides a movable base for a collaborative robot for cooking, the movable base comprising: a housing part on which a collaborative robot may be installed; a display part selectively displaying a plurality of different colors; a wheel unit having at least one pair of wheels and provided on the bottom surface of the housing part; and a discharge hole unit having one or more through holes so as to discharge a liquid flowing into the housing part.

## Description

### [Technical Field]

The present disclosure relates to a movable base for a collaborative robot for cooking and, more particularly, to a movable base for a collaborative robot for cooking that may overcome harsh environmental conditions in a confined cooking workspace while occupying minimal space.

### [Background Art]

A collaborative robot (COBOT) is a robot designed to interact with humans primarily in production sites, working with humans to perform tasks. While conventional industrial robots typically intend to replace human labor in the isolated workspaces within production sites, collaborative robots complement human efforts by working together with humans to increase work efficiency.

Recently, robotics-related technology for providing contactless services has been actively developed, and there is a growing interest in adopting collaborative robots in the restaurant industry, where robots may handle simple, repetitive, and dangerous tasks, allowing people to concentrate on providing services.

The food cooking process is similar to the manufacturing process in a factory. Like a factory where a robot performs a series of tasks repeatedly upon receiving an operating procedure for a manufacturing process, cooking may also be performed repeatedly by inputting a cooking method. Therefore, the robot may perform tasks such as transporting, placing, and shaking prepared food ingredients according to a predetermined cooking method.

Recently, there is a growing need for the application of advanced collaborative robot technology that may be directly applied to the restaurant industry beyond the simple repetitive tasks described above.

For example, a collaborative robot may be used in a cooking system for fried foods such as chicken to perform a frying task. The collaborative robot may work with people in the same space using safety features such as collision detection and deceleration mode, which may contribute to the mass production of food such as chicken.

Collaborative robots commonly used for cooking tasks are usually installed in such a way to ensure safety, which requires the use of a stand with a ground contact surface or constructs a structure for permanent fixation. However, the above use or installation requires separate construction, which may result in additional issues such as financial expenses or damage to the building. Moreover, the above approach has a limitation in that frequent movement is not possible for collaborative robots that perform multiple cooking processes.

Moreover, since commercial cooking spaces are usually very tight, and collaborative robots may be adversely affected by harsh external environmental elements such as oil, water, and temperature, there is a need for a solution to address the environmental challenges.

### [Disclosure]

### [Technical Problem]

An object of the present disclosure is to ensure safety by enabling a worker to predict the task of a collaborative robot and to provide a movable base of the collaborative robot for cooking processes, which may be installed quickly and reliably by removing construction elements for fixing the collaborative robot within a cooking space.

### [Technical Solution]

A movable base for a collaborative robot for cooking according to one embodiment of the present disclosure may comprise a housing part on which a collaborative robot is installed; a display part selectively displaying a plurality of different colors; a wheel unit having at least one pair of wheels and provided on the bottom surface of the housing part; and a discharge hole unit having one or more through holes to discharge liquid flowing into the housing part.

In one embodiment, the display part may comprise a light source unit selectively emitting light in a plurality of different colors; and a controller sharing an interface with a collaborative robot installed in the housing part and controlling the light emission from the light source unit.

In one embodiment, the controller may control the light source unit to selectively display a plurality of colors including a first color representing a first state in which the collaborative robot is performing a cooking task; a second color representing a second state in which the collaborative robot is not performing a cooking task; a third color representing a third state in which the collaborative robot is stationary and not operating; and a fourth color representing a fourth state in which the collaborative robot detects the occurrence of a collision.

In one embodiment, the controller may control the light source unit in a flashing mode in which light is emitted with blinking or a non-flashing mode in which light is emitted without blinking.

In one embodiment, the flashing mode may include a first flashing mode in which light is emitted with blinking at a predetermined period and a second flashing mode in which light is emitted with blinking at a different period from the first flashing mode.

In one embodiment, the housing part may have a hollow space comprising a first space in which the main body part of the collaborative robot is installed; a second space housing the hand body part of the collaborative robot at the top of the second space and formed to cover the upper surface of the first space; and a third space housing the wheel unit at the bottom of the third space and formed to separate the lower surface of the first space from the ground.

In one embodiment, both the first space and the second space may have discharge grooves that guide liquid flown to the inside to be discharged toward the side surface.

In one embodiment, the housing part further comprises a fastening means for securing the position of the housing part by attaching the housing part to another structure, and the housing part may include a detachable fastened part coupled to the fastening means.

Other specific details of the present disclosure are included in the detailed description and drawings.

### [Advantageous Effects]

The embodiments of the present disclosure provides at least the following effects.

According to the present disclosure, a collaborative robot may be easily moved and installed to another location, and the main body part of the collaborative robot may remain stable and adequately protected from external factors in a cooking space, including exposure to high-temperature and water during cleaning.

Also, the present disclosure allows a worker to intuitively judge the movement of the collaborative robot or the status of work progress and ensures safety during collaborative work through comprehensive interaction elements.

Also, the present disclosure employs a non-fixed installation method which minimizes unnecessary installation work at the work site and enables stable installation through a fastening structure with surrounding structural elements.

The technical effects of the present disclosure are not limited to the technical effects described above, and other technical effects not mentioned herein may be understood to those skilled in the art to which the present disclosure belongs from the description below.

### [Description of Drawings]

FIG. 1 is a perspective drawing of a movable base on which a collaborative robot for cooking has been installed according to one embodiment of the present disclosure.
FIG. 2 is a perspective drawing of a movable base for a collaborative robot for cooking according to one embodiment of the present disclosure.
FIG. 3 is an exploded perspective view of the movable base of FIG. 2.
FIG. 4 is a block diagram illustrating the concept of a method for displaying the status of a collaborative robot on a display part according to one embodiment of the present disclosure.
FIG. 5 illustrates one embodiment in which the movable base for a collaborative robot for cooking of FIG. 1 is installed together with other cooking devices.

### [Mode for Disclosure]

The advantages and features of the present disclosure, and a method for achieving them will be clearly understood with reference to the embodiments described in detail together with appended drawings. However, the technical principles and spirit of the present disclosure are not limited to the embodiments disclosed below but may be implemented in various other forms; rather, the present embodiments are provided to make the present disclosure complete and inform those skilled in the art clearly of the technical scope of the present disclosure, and the technical principles and spirit of the present disclosure may be defined within the technical scope of the appended claims. Throughout the document, the same reference symbol refers to the same constituting element.

Also, the embodiments of the present disclosure will be described with reference to cross-sectional views and/or simplified drawings, which represent the ideal illustration of the present disclosure. Therefore, the structure of the illustration may be modified according to the employed manufacturing technology and/or tolerance error. Also, each constituting element of the corresponding drawing according to the present disclosure may have been magnified or reduced for the purpose of the description. In what follows, specific embodiments of the present disclosure will be described with reference to the accompanying drawings.

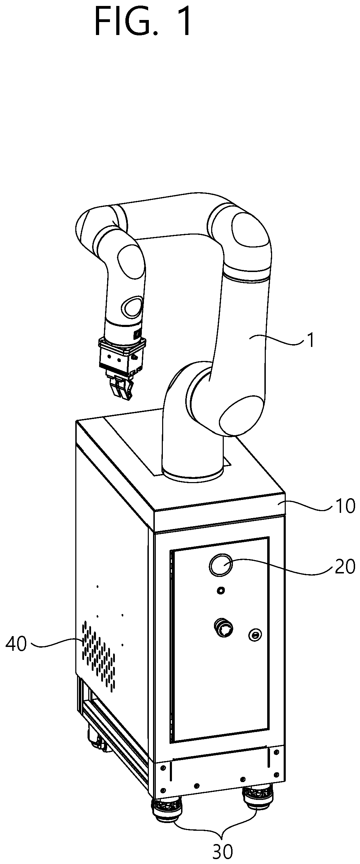

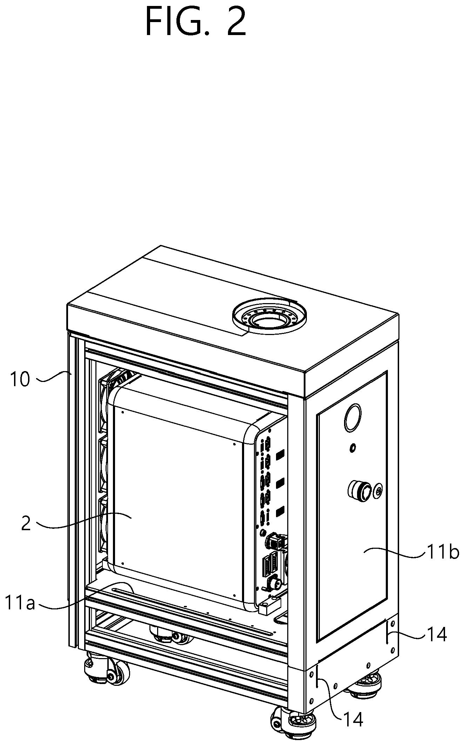

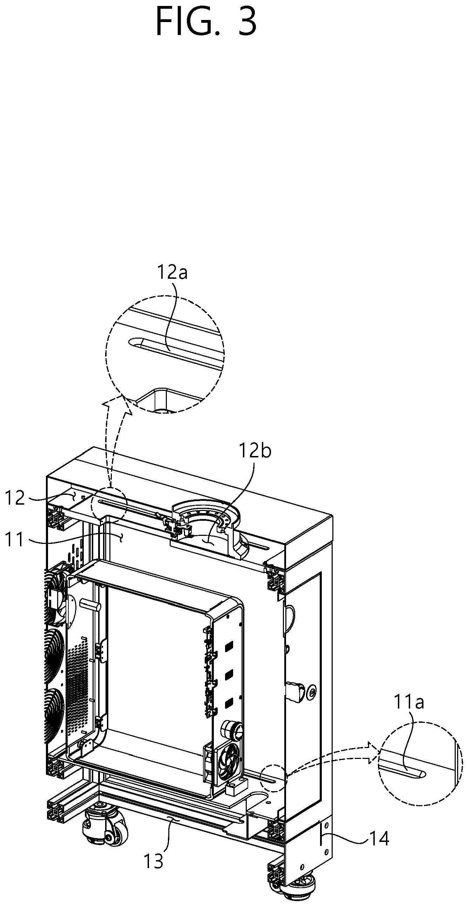

FIG. 1 is a perspective drawing of a movable base on which a collaborative robot for cooking has been installed according to one embodiment of the present disclosure, FIG. 2 is a perspective drawing of a movable base for a collaborative robot for cooking according to one embodiment of the present disclosure, and FIG. 3 is an exploded perspective view of the movable base of FIG. 2.

A movable base for a collaborative robot for cooking according to one embodiment of the present disclosure may comprise a housing part 10 on which a collaborative robot is installed, a display part installed in the housing part 10, a wheel unit 30, and a discharge hole unit 40, which constitute the basic structure of the present disclosure.

As shown in the figure, a hand body part 1 of a collaborative robot comprising a plurality of articulated arms is installed outside the movable base according to the present disclosure, and the main body part 2 corresponding to the controller of the collaborative robot is installed inside the movable base.

The housing part 10 constitutes the main body part of the movable base on which the collaborative robot is installed, and the top and bottom surfaces of the main body are formed to have a predetermined area to allow stable installation of the hand body part 1 and the wheel unit 30.

For example, the housing part 10 may be designed with front and rear surfaces narrower than the side surface, resulting in a relatively short width for the housing part 10. This structure is employed so that the movable base may be easily installed in a confined cooking space, and instability issues arising from the narrow area of the housing part 10 may be addressed through a fastening structure described later.

The hand body part 1 of the collaborative robot is installed on one side of the upper surface of the housing part 10, and for this purpose, the upper portion of the housing part 10 has an installation hole 12b into which the end portion of the hand body part 1 of the collaborative robot is inserted. In other words, the collaborative robot is installed in such a way that a portion of the hand body part 1 of the collaborative robot is inserted into the installation hole 12b, and thus, the hand body part 1 penetrating the installation hole 12b may be connected to the main body part 2.

The housing unit 10 has a hollow space (in what follows, a first space 11) housing a controller corresponding to the main body part 2 of the collaborative robot. The main body part 2 installed in the first space 11, being connected electrically and/or mechanically to the hand body part 1 of the collaborative robot installed outside the housing unit 10, may generate a control command for the hand body part 1 and transmit and receive data between them.

Meanwhile, the housing part 10 may be designed with one side of the outer surfaces capable of being opened. In other words, at least one door part 11b that may be opened or closed may be installed on the outer surface of the housing part 10 so that the inner space 11 of the hollow is opened and connected to the outer space or closed and disconnected from the outer space.

Considering the arrangement and installation form of the movable base at the work site, it would be desirable for the door part 11b to be located at the front of the housing part 10. A worker may open the door part 1 1b to insert and install the main body part 2 into the first space 11 or separate and take out the main body part 2 from the first space 11. Afterward, the door part 11b may be closed to shield the main body part 2 from external influences such as water, temperature, and oil.

Meanwhile, according to one embodiment, the display part 20 may be installed on one side of the door part 11b installed on the front of the housing unit 10. More specifically, the display part 20 may house the light source unit 21 that emits light to display colors to the outside, which emits light toward the front surface of the door part 11b. Further details on a specific embodiment of the display part 20 will be described later.

The first space 11 according to one embodiment of the present disclosure is designed to house the main body part 2 of the collaborative robot while keeping the main body part 2 to be separated from the inner wall surface by a predetermined distance. This design aims to minimize the effect of the high-temperature cooking environment on the main body part 2 of the collaborative robot and discharge foreign substances, including oil and other fluids flown to the inside, through the side surfaces.

Referring to FIGS. 2 and 3, the housing part 10 according to one embodiment of the present disclosure may have a plurality of hollow spaces separated from each other. For example, in addition to the first space 11, the housing part 10 may further include a second space 12 and a third space 13 formed as separate spaces in the upper and lower part of the first space 11, respectively.

The second space 12 and third space 13, being formed separately from the first space 11, prevent the main body part 2 of the collaborative robot from the high temperature of the cooking environment or intrusion of a foreign substance such as oil, enabling the main body part 2 to remain stable and function properly.

The second space 12 houses the hand body part 1 of the collaborative robot in the upper part of the second space 12 and covers the upper surface of the first space 11. In other words, the second space 12 primarily serves to block a foreign substance or liquid from entering the first space 11 through the upper portion in which the hand body part 1 of the collaborative robot is installed. In addition, the second space 12 is formed to have a predetermined height so that the first space 11 is formed to be separated in the upward direction from the outside.

Meanwhile, the installation hole 12b penetrates one side of the second space 12 so that a portion of the hand body part 1 of the collaborative robot installed in the upper part of the second space 12 is mechanically/electrically connected to the main body part 2 installed in the first space 11.

The wheel unit 30 is installed in the lower part of the third space 13, which is formed to separate the lower surface of the first space 11 from the ground. The third space 13 forms a space separating the first space 11 from the ground, thereby preventing entering of fluids due to frequent water cleaning in the cooking environment.

As shown in the figure, different from the first space 11 and second space 12, the third space 13 may be designed so that the inner wall is exposed to the outside. This design aims to allow liquid including water to drain smoothly through the lower portion of the housing part 10.

Referring to FIG. 3, the first space 11 and the second space 12 according to one embodiment of the present disclosure may have discharge grooves 11a, 12a that guide the liquid introduced to the inside to be discharged toward the side surface. This design aims to prevent liquids from contacting the main body part 2 of the collaborative robot installed in the central portion of the first space 11; for example, at least one or more grooves may be formed to extend along the periphery on the bottom surfaces of the first space 11 and the second space 12.

More specifically, the hand body part 1 of the collaborative robot is installed on the top of the housing part 10, and the second space 12 is prepared to first prevent liquids and foreign substances from entering to the first space 11. If there still exists liquid flowing into the first space 11, the second space 12 guides the liquid to fall toward the side surface of the second discharge groove 12a disposed on the side of the bottom surface. The liquid flowing along the second discharge groove 12a may be directed to fall near the inner wall of the first space 11 and discharged to the outside through the discharge hole unit 40 formed on the wall.

At this time, if there remains liquid in the first space 11, the first space 11 guides the liquid to fall toward the side surface of the first discharge groove 11a disposed on the side of the bottom surface. In other words, while minimizing the contact between the main body part 2 of the collaborative robot installed in the central portion and the liquid, the first space 11 guides the liquid to be discharged toward the third space 13 located below the first space 11.

The wheel unit 30 includes at least one pair of wheels installed on the bottom surface of the housing part 10. This structure is designed to easily move the installation location of the collaborative robot while tasks are performed, and at the same time, to form a separation space below for convenient cleaning, such as water cleaning.

Preferably, two pairs of wheels are arranged to be symmetrical to each other on the lower surface of the housing part 10, thereby stably supporting the housing part 10 from the ground.

The discharge hole unit 40 comprises at least one or more through holes provided to discharge liquid flowing into the housing portion 10. In particular, the discharge hole unit 40 is formed along the wall of the first space 11 and/or second space 12 and serves to discharge liquid flowing down the side surface of the inner space of the housing portion 10.

By employing the structure described above, the housing part 10 of the present disclosure enables the collaborative robot to be moved easily, and at the same time, adequately protects the main body part 2 of the collaborative robot to remain stable against external factors in a cooking space, including exposure to high-temperature and water during cleaning.

The display part 20 displays the status of the collaborative robot installed on the movable base of the present disclosure to the worker by selectively displaying a plurality of different colors. In other words, to prevent safety accidents occurring during the operation of the collaborative robot, the operating status of the collaborative robot is visually displayed to the worker.

The display part 20 according to one embodiment of the present disclosure may comprise a light source unit 21 selectively emitting light in a plurality of different colors; and a controller 22 sharing an interface with the collaborative robot installed in the housing part 10 and controlling the light emission from the light source unit 21.

The light source unit 21 is installed on the outer surface of the housing part 10; more preferably, the light source unit 21 may be installed as an LED light source on one side of the door part 11b formed on the front unit of the housing part 10. The installed LED light source may selectively display different colors. For example, the LED light source may emit red, white, blue, or yellow light.

The controller 22 is software with a built-in algorithm for generating control commands for the color or blinking state of the light emitted by the light source unit 21 and may share an interface with the main body part 2 (controller) of the collaborative robot installed in the housing part 10. In other words, the controller 22 may obtain status information of the collaborative robot installed on the movable base of the present disclosure in real-time and generate a control command for light emission of the light source unit 21 based on the obtained status information.

Also, the controller 22 may share an interface with the user interface (UI) of the collaborative robot. In other words, the controller 22 may be embedded in a separate terminal device or a collaborative robot, share a user interface with the collaborative robot, and receive a signal of the worker input through the user interface.

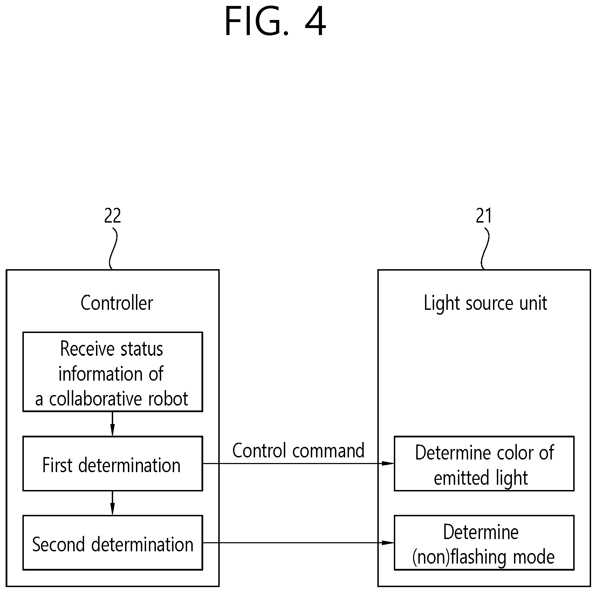

In particular, the controller 22 receives the real-time, status information of the collaborative robot and controls the color or blinking state of the light emission of the light source unit 21 based on the received real-time, status information. In what follows, the operation of the controller 22 will be described in detail with reference to FIG. 4.

FIG. 4 is a block diagram illustrating the concept of a method for displaying the status of a collaborative robot on the display part 20 according to one embodiment of the present disclosure.

The controller 22 according to one embodiment of the present disclosure may obtain the status information of a collaborative robot installed on a movable base and identify the real-time status into a plurality of different states (in what follows, 'primary status'). For example, the real-time status may be identified into a plurality of primary states, including a first state in which the collaborative robot is performing a cooking task, a second state in which the collaborative robot is not performing a cooking task, a third state in which the collaborative robot is stationary and not operating, and a fourth state in which a collision occurs in the collaborative robot.

The controller 22 may generate a control command to display different colors on the light source unit 21 according to the first to fourth states. In other words, the controller 22 may generate a control command for the light source unit 21 to selectively display a plurality of colors including a first color representing a first state in which the collaborative robot is performing a cooking task; a second color representing a second state in which the collaborative robot is not performing a cooking task; a third color representing a third state in which the collaborative robot is stationary and not operating; and a fourth color representing a fourth state in which the collaborative robot detects the occurrence of a collision.

In addition to displaying the real-time status of the collaborative robot through color, the controller 22 may control the light source unit 21 either in a flashing mode in which light is emitted with blinking or in a non-flashing mode in which light is emitted without blinking. In other words, the display part 20 may display the comprehensive status of the collaborative robot by combining the color and/or blinking state of the emitted light.

The flashing mode according to one embodiment of the present disclosure may include a plurality of flashing modes having different periods and use the flashing modes to display the predefined real-time status (in what follows, 'secondary status') of the collaborative robot. For example, the flashing mode may include a first flashing mode in which light is emitted with blinking at a predetermined period and a second flashing mode in which light is emitted with blinking at a different period from the first flashing mode.

The display part 20 may indicate the primary status of the collaborative robot, such as whether the collaborative robot is moving, whether the collaborative robot is working, and whether a collision has occurred, through the color of emitted light. In addition to the displayed primary status, a more specific secondary status of the collaborative robot may be indicated through the blinking state and blinking period of light.

At this time, the primary status or secondary status indicated by each color or (non) flashing mode may be preset by the worker through a user interface. In what follows, one example of the collaborative robot's status indicated by the display part 20 in the preset state will be described.

In one example, red may be set as a first color representing the first state in which the collaborative robot is performing a cooking task, and the flashing mode of the light source unit 21 represents the state just before the collaborative robot operates.

In other words, the controller 22 generates a control command for the light source unit 21 to emit red light, indicating the first state as the primary status of the collaborative robot. In addition to the above, the controller 22 may control the light source unit 21 to operate in the flashing mode in which the light source unit 21 emits blinking red light, indicating that the collaborative robot is in the secondary status and the hand body part 1 is about to move.

In another example, white may be set as a second color representing the second state in which the collaborative robot is not performing a cooking task. Also, the first flashing mode of the light source unit 21 may be set to indicate a normal state, and the second flashing mode may be set to indicate a state in which the collaborative robot is booting.

In other words, the controller 22 generates a control command for the light source unit 21 to emit white light, indicating the second state as the primary status of the collaborative robot. In addition to the above, the controller 22 may selectively control the light source unit 21 to operate in the first flashing mode or second flashing mode in which the light source unit 21 emits blinking white light, indicating that the collaborative robot is in the secondary status and the collaborative robot is in the normal state or booting state.

In yet another example, blue or green may be set as a third color representing the third state in which the collaborative robot is stationary and not operating. Also, the first flashing mode of the light source unit 21 may be set to indicate a teaching state, and the second flashing mode may be set to indicate a direct teaching of the collaborative robot.

In other words, the controller 22 generates a control command for the light source unit 21 to emit blue light, indicating the third state as the primary status of the collaborative robot. In addition to the above, the controller 22 may selectively control the light source unit 21 to operate in the first flashing mode or second flashing mode in which the light source unit 21 emits blinking blue light, indicating that the collaborative robot is in the secondary status and the collaborative robot is in the teaching state or direct teaching state.

In still another example, yellow may be set as a fourth color representing the fourth state in which a collision of the collaborative robot is detected. Also, the flashing mode of the light source unit 21 may be set to indicate a state in which the collaborative robot is rebooting.

In other words, the controller 22 generates a control command for the light source unit 21 to emit yellow light, indicating the fourth state as the primary status of the collaborative robot. In addition to the above, the controller 22 may control the light source unit 21 to operate in the flashing mode in which the light source unit 21 emits blinking yellow light, indicating that the collaborative robot is in the secondary status and the collaborative robot is in the rebooting state.

By employing the method above, the movable base according to the present disclosure allows a worker to intuitively judge the movement of the collaborative robot or status of work progress and ensures safety during collaborative work through comprehensive interaction elements.

Meanwhile, typical collaborative robots used for cooking are secured to an anchor or a heavy object by coupling their fixing part thereto for implementing a precise motion. On the other hand, the movable base according to the present disclosure is designed to be non-fixed, minimum sized, and mobile. In particular, for easy installation in a cooking space, the housing part 10 is designed to have a width relatively shorter than its length. At this time, if the center of gravity is not aligned with the symmetrical axis due to the narrow support surface, the movable base and the collaborative robot installed on the movable base may lose their balance and fall over.

Accordingly, the movable base according to one embodiment of the present disclosure adopts a fastening structure with other structural elements to minimize the unbalanced weight at the center of gravity due to the housing part 10 having a relatively short width and to fix the reference position of the collaborative robot employed for cooking.

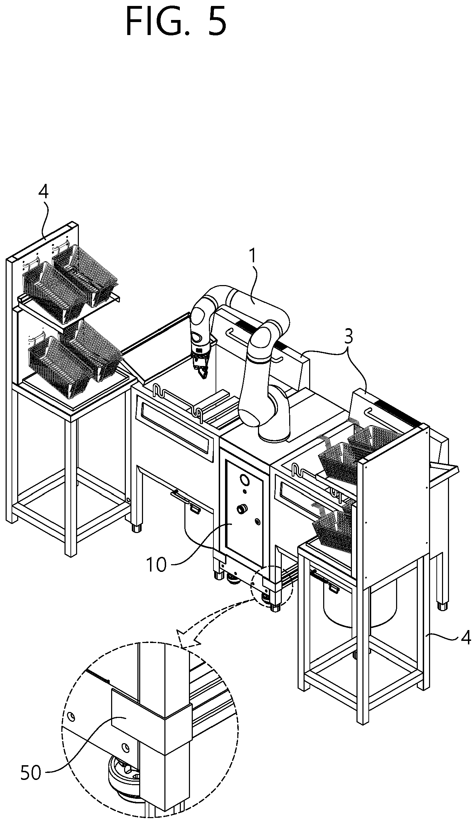

FIG. 5 illustrates one embodiment in which the movable base for a collaborative robot for cooking of FIG. 1 is installed together with other cooking devices.

As shown in the figure, FIG. 5 shows a case in which a movable base for a collaborative robot for cooking according to one embodiment of the present disclosure is used in conjunction with another frying device 3 and a basket holder 4, forming a set. However, the illustration is only an example for the convenience of understanding, and the present disclosure may use other structural elements for various other cooking processes without a limitation.

The movable base for the collaborative robot for cooking according to one embodiment of the present disclosure may further include a fastening means 50 that fixes the position of the housing part 10 by fastening the housing part 10 to another structural element such as the frying device 3. At this time, a detachable fastened part 14 coupled to the fastening means 50 is formed on one side of the housing part 10.

For example, the fastening means 50 may be a fastening ring (band) made of stainless steel capable of binding one side of the housing part 10 and surrounding cooking devices, and the fastened part 14 may be a fastening groove into which a part of the fastening ring is inserted and coupled. In other words, the fastening ring, which is the fastening means 50, binds to a surrounding device on one side while the other side is inserted and fastened into the groove, thereby fixing the absolute position where the housing part 10 is installed to the surrounding device.

In other words, the movable base of the present disclosure may be installed by forming a set with surrounding devices through the fastening means 50, ensuring structural stability in a narrow cooking space. Also, the worker may easily change the installation location of the collaborative robot by disconnecting the collaborative robot from surrounding devices as needed.

According to various embodiments described above, the movable base of the present disclosure enables a collaborative robot to be easily moved to another location, and the main body part 2 of the collaborative robot may remain stable and adequately protected from external factors in a cooking space, including exposure to high-temperature and water during cleaning.

Also, according to the present disclosure, a worker may intuitively judge the movement of the collaborative robot or the status of work progress and ensures safety during collaborative work through comprehensive interaction elements.

Also, the present disclosure employs a non-fixed installation method which minimizes unnecessary installation work at the work site and enables stable installation through a fastening structure with surrounding structural elements.

As described above, it is apparent for those skilled in the art that the present disclosure may be embodied in other specific forms without changing the technical principles or essential characteristics of the present disclosure. Therefore, the embodiments described above should be regarded as being illustrative rather than restrictive in every aspect. The technical scope of the present disclosure should be determined by the appended claims given below rather than the detailed descriptions above, and it should be understood that the implications and scope of the appended claims and all of the modifications or modified forms that are derived from an equivalent concept of the present disclosure belong to the technical scope of the present disclosure.

## Claims

1. A movable base for a collaborative robot for cooking, the movable base comprising:
a housing part on which a collaborative robot is installed;
a display part selectively displaying a plurality of different colors;
a wheel unit having at least one pair of wheels and provided on the bottom surface of the housing part; and
a discharge hole unit having one or more through holes to discharge liquid flowing into the housing part.

2. The movable base of claim 1, wherein the display part comprises:
a light source unit selectively emitting light in a plurality of different colors; and
a controller sharing an interface with a collaborative robot installed in the housing part and controlling the light emission from the light source unit.

3. The movable base of claim 2, wherein the controller controls the light source unit to selectively display a plurality of colors including:
a first color representing a first state in which the collaborative robot is performing a cooking task;
a second color representing a second state in which the collaborative robot is not performing a cooking task;
a third color representing a third state in which the collaborative robot is stationary and not operating; and
a fourth color representing a fourth state in which the collaborative robot detects the occurrence of a collision.

4. The movable base of claim 3, wherein the controller controls the light source unit in a flashing mode in which light is emitted with blinking or a non-flashing mode in which light is emitted without blinking.

5. The movable base of claim 4, wherein the flashing mode includes a first flashing mode in which light is emitted with blinking at a predetermined period and a second flashing mode in which light is emitted with blinking at a different period from the first flashing mode.

6. The movable base of claim 1, wherein the housing part has a hollow space comprising:
a first space in which the main body part of the collaborative robot is installed;
a second space housing a hand body part of the collaborative robot at the top of the second space and formed to cover the upper surface of the first space; and
a third space housing the wheel unit at the bottom of the third space and formed to separate the lower surface of the first space from the ground.

7. The movable base of claim 6, wherein both the first space and the second space have discharge grooves that guide liquid flown to the inside to be discharged toward the side surface.

8. The movable base of claim 7, further comprising:
a fastening means for securing the position of the housing part by attaching the housing part to another structure, and
the housing part includes a detachable fastened part coupled to the fastening means.
